(19) Europäisches Patentamt
European Patent Office
Office européen des brevets

(11) EP 4 624 293 A1

(12) **EUROPÄISCHE PATENTANMELDUNG**

(43) Veröffentlichungstag:
**01.10.2025 Patentblatt 2025/40**

(21) Anmeldenummer: **25162145.4**

(22) Anmeldetag: **06.03.2025**

(51) Internationale Patentklassifikation (IPC):
***B60W 30/16*** *(2020.01)* ***B60W 30/18*** *(2012.01)*

(52) Gemeinsame Patentklassifikation (CPC):
**B60W 30/16; B60W 30/18163;** B60W 2552/10; B60W 2554/801; B60W 2556/10; B60W 2754/30

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **28.03.2024 DE 102024202989**

(71) Anmelder: **VOLKSWAGEN AG**
**38440 Wolfsburg (DE)**

(72) Erfinder:
- **Dobkowitz, Dirk**
  **38440 Wolfsburg (DE)**
- **Kaste, Jonas**
  **38440 Wolfsburg (DE)**
- **Kallmeyer, Felix**
  **38440 Wolfsburg (DE)**
- **Kutsenok, Denis**
  **38440 Wolfsburg (DE)**

(54) **VERFAHREN ZUR LÄNGSFÜHRUNG EINES FAHRZEUGS IN BEZUG ZU EINEM VORAUSFAHRENDEN VORDERFAHRZEUG MITTELS EINES ELEKTRONISCHEN ABSTANDSHALTESYSTEMS SOWIE ELEKTRONISCHES ABSTANDSHALTESYSTEM**

(57) Verfahren zur Längsführung eines Fahrzeugs (1) in Bezug zu einem vorausfahrenden Vorderfahrzeug (2, 11) mittels eines elektronischen Abstandshaltesystems (3):
- Längsführen des Fahrzeugs (1) hinter dem direkt vor dem Fahrzeug (1) fahrenden Vorderfahrzeug (2) abhängig von einem bereitgestellten ersten Sollabstand (6) auf einer ersten Fahrspur (7) einer Fahrbahn (8) mit zumindest zwei benachbarten Fahrspuren (7, 9) zum Befahren in eine Fahrtrichtung;
- Bestimmen eines zweiten Sollabstands (11) nach einem durchgeführten Spurwechsel des Fahrzeugs (1) von der ersten Fahrspur (7) zu einer dazu unterschiedlichen zweiten Fahrspur (9) der Fahrbahn (8) abhängig von einer lateralen Position der zweiten Fahrspur (9) relativ zur ersten Fahrspur (7); und
- Längsführen des Fahrzeugs (1) zu dem die Fahrspur ebenfalls wechselnden Vorderfahrzeug (2) oder zu einem auf der zweiten Fahrspur (9) direkt vor dem Fahrzeug (1) fahrenden weiteren Vorderfahrzeug (11) auf der zweiten Fahrspur (9) mit dem Abstandshaltesystem (3) abhängig von dem bestimmten zweiten Sollabstand (10).

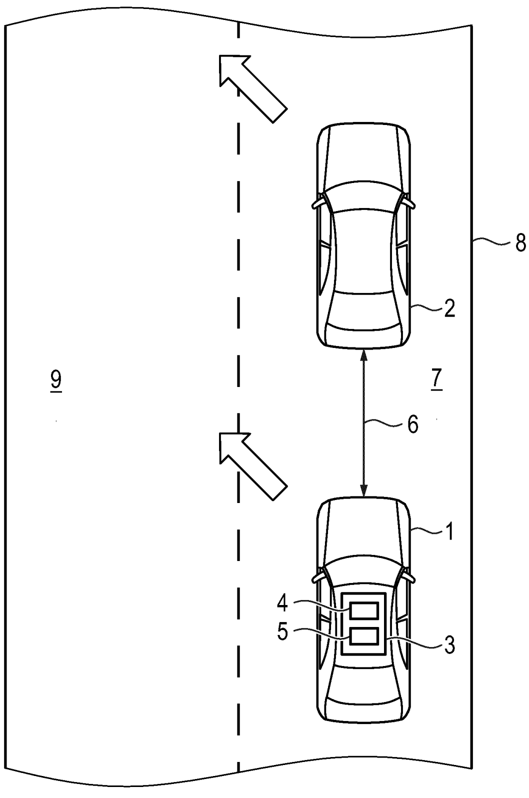


Fig. 2

EP 4 624 293 A1

## Beschreibung

Aspekte der Erfindung betreffen ein Verfahren zur Längsführung eines Fahrzeugs in Bezug zu einem vorausfahrenden Vorderfahrzeug mittels eines elektronischen Abstandshaltesystems sowie ein elektronisches Abstandshaltesystem.

Es sind Fahrzeuge mit einem Abstandshaltesystem (englisch: Adaptive Cruise Control, ACC) zur Regelung eines Abstands zum vorausfahrenden Fahrzeug bekannt. Ein zu regelnder Abstand richtet sich insbesondere nach einer Momentangeschwindigkeit des Fahrzeugs. Zusätzlich hat der Fahrer zum Beispiel eine Möglichkeit mittels Tasten am Lenkrad eine applizierte Kennlinie stufenweise, zum Beispiel über fünf Regelstufen, anzupassen und so den Abstand zu variieren.

Der Erfindung liegt die Aufgabe zugrunde ein Verfahren und ein elektronisches Abstandshaltesystem für ein Fahrzeug bereitzustellen, um die mit einem Assistenzsystem unterstützte Längsführung des Fahrzeugs zu verbessern.

Die Aufgabe wird durch die Gegenstände der unabhängigen Ansprüche gelöst. Vorteilhafte Weiterbildungen der Erfindung sind durch die abhängigen Ansprüche, die folgende Beschreibung sowie die Figuren definiert.

Ein Aspekt der Erfindung betrifft ein Verfahren zur Längsführung eines Fahrzeugs in Bezug zu einem vorausfahrenden Vorderfahrzeug mittels eines elektronischen Abstandshaltesystems. Insbesondere weist das Verfahren folgende Schritte auf:

a) Insbesondere Bereitstellen eines ersten Sollabstands;
b) Insbesondere Längsführen des Fahrzeugs hinter dem direkt vor dem Fahrzeug fahrenden Vorderfahrzeug abhängig von dem bereitgestellten ersten Sollabstand auf einer ersten Fahrspur einer Fahrbahn mit zumindest zwei benachbarten Fahrspuren zum Befahren in eine Fahrtrichtung;
c) Insbesondere Durchführen eines Spurwechsels des Fahrzeugs von der ersten Fahrspur zu einer dazu unterschiedlichen zweiten Fahrspur der Fahrbahn;
d) Insbesondere Bestimmen eines zweiten Sollabstands nach dem durchgeführten Spurwechsel abhängig von einer lateralen Position der zweiten Fahrspur relativ zur ersten Fahrspur; und
e) Insbesondere Längsführen des Fahrzeugs zu dem die Fahrspur ebenfalls wechselnden Vorderfahrzeug oder zu einem auf der zweiten Fahrspur direkt vor dem Fahrzeug fahrenden weiteren Vorderfahrzeug auf der zweiten Fahrspur mit dem Abstandshaltesystem abhängig von dem bestimmten zweiten Sollabstand.

Dadurch ist eine verbesserter Längsführung des Fahrzeugs, die mit einem Assistenzsystem zumindest unterstützt wird, erreicht. Es ist ein natürlicheres, menschenähnlicheres und somit realitätsnäheres Fahrverhalten bei dem Verfahren, bei welchem ein Assistenzsystem zur Längsführung, also ein Abstandshaltesystem, genutzt wird, erreicht. Zumindest einige Schritte des Verfahrens können bezüglich einer Reihenfolge zeitlich vertauscht oder zumindest teilweise überlappend ausgeführt werden.

Der Sollabstand ist insbesondere ein im Betrieb des elektronischen Abstandshaltesystems einzustellender Sollabstand zwischen dem Fahrzeug, welches das elektronische Abstandshaltesystem aufweist, und einem aktuell vorausfahrendem Fahrzeug. Der Sollabstand kann eine Entfernung sein. Der Sollabstand kann alternativ zum Beispiel aber auch eine zeitliche Angabe sein oder charakterisieren, beispielsweise eine Zeitlücke sein. Die Zeitlücke ist insbesondere eine Zeitdauer, die das Fahrzeug, insbesondere in der momentanen Situation, zum Erreichen des Vorderfahrzeugs benötigt.

Insbesondere ist der erste Sollabstand, wenn beispielsweise die zweite Fahrspur eine Überholspur ist, also bestimmungsgemäß zum Befahren mit höherer Geschwindigkeit als auf der ersten Fahrspur vorgesehen ist, größer als der zweite Sollabstand, insbesondere wenn die erste Fahrspur für langsameres Fahren bestimmungsgemäß vorgesehen ist. Ist beispielsweise die zweite Fahrspur für langsameres Fahren bestimmungsgemäß vorgesehen und die erste Fahrspur eine Überholspur, dann ist der zweite Sollabstand gegebenenfalls größer als der erste Sollabstand. Als erste Fahrspur wird insbesondere die vor dem Spurwechsel befahrene Fahrspur bezeichnet und als zweite Fahrspur wird insbesondere die nach dem Spurwechsel befahrene Fahrspur bezeichnet. Das Verfahren ist also insbesondere für einen Spurwechsel sowohl von einer Fahrspur für langsameres Fahren auf eine Überholspur als auch umgekehrt vorgesehen. Das Verfahren ermöglicht gerade bei einem assistenzsystemunterstützten Abstandshalten zu einem Vorderfahrzeug, insbesondere bei einem Wechsel der Fahrspur und einem damit einhergehenden Ändern des Fahrverhaltens, eine komfortablere und/oder im Vergleich zu einem Führen ohne Assistenzsystem daran angepasstere Fahrweise.

Es ist möglich, dass im Schritt d) zum Bestimmen des zweiten Sollabstands der zweite Sollabstand vorgegeben ist und abhängig von der zweiten Fahrspur ausgewählt wird.

Auf einer dreispurigen Fahrbahn mit drei Fahrbahnen in eine Fahrtrichtung, wie beispielsweise einer Autobahn, beträgt beispielsweise eine Differenz zwischen dem ersten Sollabstand und dem zweiten Sollabstand zwischen 20-30%. Dies entspricht bei einer Ist-Geschwindigkeit von 120km/h ca. einem Sollabstand für eine linke Spur 30 Meter, für eine mittlere Spur 40 Meter und für eine rechte Spur 50 Meter. Fährt das Fahrzeug beispielsweise auf der linken Spur, dann beträgt der Sollabstand zum Beispiel 30 Meter und der zweite Sollabstand beträgt dann zum Beispiel 40 Meter.

In einem Ausführungsbeispiel wird mindestens ein dritter Sollabstand bestimmt. Das Fahrzeug wird auf der zweiten Fahrspur zunächst abhängig von dem dritten Sollabstand längsgeführt. Insbesondere wird das Fahrzeug erst anschließend abhängig von dem zweiten Sollabstand längsgeführt. Das Fahrzeug wechselt also nicht ruckartig vom ersten Sollabstand zum zweiten Sollabstand, sondern verwendet dazwischen den dritten Sollabstand, insbesondere zumindest einen dritten Sollabstand. Dadurch wird ein Beschleunigungsverhalten geglättet und der Fahrkomfort erhöht.

Insbesondere wird der dritte Sollabstand nur dann bestimmt, falls eine Kolonnenfahrt vorliegt. Zum Beispiel folgt das Fahrzeug dem Vorderfahrzeug auf einer Fahrbahn mit zumindest zwei benachbarten Fahrspuren in eine Fahrtrichtung für eine vorgegebene Mindestzeit bei einer Kolonnenfahrt. Denn bei einer Kolonnenfahrt ist ein ruckartiges Ändern des Abstands zum Vorderfahrzeug für den Fahrkomfort unangenehm und soll vermieden werden. Bei einem Verlassen einer Kolonne, wie beispielsweise bei einem Überholvorgang, oder einem Neueinordnen in eine Kolonne, ist es erwünscht und vorteilhaft den Abstand vom ersten Sollabstand zum zweiten Sollabstand zügig zu ändern. Dies kann dadurch erreicht werden, dass der dritte Sollabstand nur dann bestimmt wird, falls eine Kolonnenfahrt vorliegt.

Vorzugsweise werden, insbesondere abhängig von einer Geschwindigkeit des Fahrzeugs, mehrere dritte Sollabstände bestimmt. Vorzugsweise werden umso mehr dritte Sollabstände bestimmt, je langsamer das Fahrzeug, insbesondere unmittelbar nach dem Spurwechsel, fährt. Insbesondere liegen die mehreren dritten Sollabstände wertmäßig zwischen dem ersten Sollabstand und dem zweiten Sollabstand. Es ist also ein sanfter Übergang zwischen dem ersten Sollabstand und dem zweiten Sollabstand ermöglicht. Insbesondere wird durch dieses Ausführungsbeispiel ein abruptes Beschleunigen oder Bremsen vom ersten Sollabstand zu dem zweiten Sollabstand verhindert. Dadurch wird ein Fahrkomfort erhöht. Eine temporäre dynamische Änderung des Sollabstands ist somit erreicht.

In einem Ausführungsbeispiel wird der dritte Sollabstand abhängig von einem Verhältnis von einem ersten Zeitanteil, während dessen das Fahrzeug die erste Fahrspur befährt, zu einem zweiten Zeitanteil, während dessen das Fahrzeug die zweite Fahrspur befährt, bestimmt. Der dritte Sollabstand ist damit gegebenenfalls wertmäßig abhängig von einer Zeitdauer, mit welcher die zweite Fahrspur seit dem Spurwechsel befahren wurde. Insbesondere wenn mehrere dritte Sollabstände bestimmt werden, nähern sich die nach dem Spurwechsel später bestimmten dritten Sollabstände dem zweiten Sollabstand wertmäßig sukzessive an. Dadurch ist der Fahrkomfort erhöht.

Zum Beispiel wird dieses Verhältnis mittels Prozentangaben angegeben. Der erste Zeitanteil und der zweite Zeitanteil ergeben insbesondere eine Gesamtzeit. Zum Beispiel beginnt die Gesamtzeit sobald der Spurwechsel beginnt und endet mit Beendigung des Spurwechsels. Die Gesamtzeit ist insbesondere ein vorgegebener Zeitraum von einem vergangenen Zeitpunkt bis zu einem aktuellen Zeitpunkt. Beispielsweise werden als Gesamtzeit die letzten 20 Sekunden betrachtet. Insbesondere ist das Fahrzeug zum betrachteten aktuellen Zeitpunkt auf der zweiten Fahrspur. Das bedeutet insbesondere, dass zunächst der erste Zeitanteil größer ist als der zweite Zeitanteil. Je länger also das Fahrzeug beispielsweise auf der zweiten Fahrspur fährt, desto größer ist der zweite Zeitanteil, insbesondere größer als der erste Zeitanteil.

Es ist zum Beispiel möglich, dass der erste Zeitanteil mit dem ersten Sollabstand multipliziert wird und der zweite Zeitanteil mit dem zweiten Sollabstand. Insbesondere wird der dritte Sollabstand als die Summe aus den beiden Multiplikationen bestimmt.

Somit ist der nach dem Spurwechsel als erstes bestimmte dritte Sollabstand wertmäßig näher am ersten Sollabstand als ein zweiter bestimmter dritter Sollabstand. Fährt zum Beispiel das Fahrzeug länger als den Gesamtzeitraum auf der zweiten Fahrspur beträgt der zweite Zeitanteil beispielsweise 100 Prozent und der erste Zeitanteil 0 Prozent. Durch die Multiplikation gilt ab diesem Zeitpunkt insbesondere der zweite Sollabstand. Somit erfolgt die Annäherung vom ersten Sollabstand zum zweiten Sollabstand sukzessive.

In einem Ausführungsbeispiel wird eine Wahrscheinlichkeit bestimmt, ob eine Kolonnenfahrt vorliegt. Bei einer Kolonnenfahrt folgt das Fahrzeug zumindest semiautonom, insbesondere vollautonom, also durch das Abstandshaltesystem zumindest unterstützt, dem Vorderfahrzeug auf einer Fahrbahn mit zumindest zwei benachbarten Fahrspuren in eine Fahrtrichtung für eine vorgegebene Mindestzeit. Abhängig von der bestimmten Wahrscheinlichkeit wird der dritte Sollabstand bestimmt. Insbesondere wird der dritte Sollabstand nur dann bestimmt, falls eine Kolonnenfahrt vorliegt.

Dadurch kann ein Fahrverhalten des Fahrzeugs erreicht werden, bei welchem das Fahrzeug, falls es einen Überholvorgang durchführt, dem weiteren Vorderfahrzeug auf der zweiten Fahrspur zügig bis auf den zweiten Sollabstand aufschließt. Ist zum Beispiel der Spurwechsel Teil der Kolonnenfahrt, dann wird insbesondere der dritte Sollabstand bestimmt, sodass das Fahrzeug sukzessive zu dem Vorderfahrzeug bis auf den zweiten Sollabstand aufschließt, indem das Fahrzeug zunächst auf den dritten Sollabstand, zu dem Vorderfahrzeug aufschließt und erst danach bis auf den zweiten Sollabstand. Dadurch wird der Fahrkomfort erhöht.

In einem Ausführungsbeispiel wird mittels einer Recheneinheit des Fahrzeugs ein Vorderfahrzeug-Historienspeicher erzeugt. Dem Vorderfahrzeug wird eine Identifikationsnummer (ID) zugewiesen. Die zugewiesene Identifikationsnummer wird als Eintrag in den Vorderfahrzeug-Historienspeicher eingetragen. Alternativ oder zusätzlich wird mittels der Recheneinheit ein Fahrspur-Historienspeicher erzeugt. Eine aktuell befahrene Fahrspur wird als Eintrag in den Fahrspur-Historienspeicher eingetragen. Insbesondere wird die Wahrscheinlichkeit der Kolonnenfahrt abhängig von dem Vorderfahrzeug-Historienspeicher bestimmt. Dadurch kann die Wahrscheinlichkeit der Kolonnenfahrt verbessert, also insbesondere auch genauer, bestimmt werden. Es kann also präziser erkannt werden, ob eine Kolonnenfahrt vorliegt oder nicht.

Beispielsweise gibt ein Eintrag in den Fahrspur-Historienspeicher an, ob eine linke oder eine rechte und gegebenenfalls bei drei Fahrspuren beispielsweise eine mittlere Fahrspur zu einem Zeitpunkt befahren wird. Dazu wird beispielsweise eine Umfeldsensorik des Fahrzeugs verwendet, um die aktuelle Fahrspur zu bestimmen. Die Umfeldsensorik des Fahrzeugs weist beispielsweise eine Kamera und/oder Radarsensoren auf.

In einem Ausführungsbeispiel wird die Identifikationsnummer, insbesondere nur dann, in den Vorderfahrzeug-Historienspeicher eingetragen, wenn Kolonnenfahrtkriterien erfüllt sind. Sind die Kolonnenfahrtkriterien beispielsweise nicht erfüllt, wird für die betreffende Uhrzeit, in welcher diese Kolonnenfahrtkriterien nicht vorliegen, eine Null oder kein Zeichen eingetragen. Beispielsweise sind die Kolonnenfahrtkriterien abhängig von einer Straßenkategorie und/oder einer Geschwindigkeit des Fahrzeugs und/oder einer Relativgeschwindigkeit zwischen dem Fahrzeug und dem Vorderfahrzeug und/oder einem Abstand des Fahrzeugs zum Vorderfahrzeug. Zum Beispiel sind die Kolonnenfahrtkriterien erfüllt, falls die Straßenkategorie eine Autobahn ist und/oder die Geschwindigkeit des Fahrzeugs kleiner als 60 km/h und/oder die Relativgeschwindigkeit zwischen dem Fahrzeug und dem Vorderfahrzeug kleiner als 2 km/h und/oder der Abstand vom Fahrzeug zum Vorderfahrzeug kleiner als 60 Meter ist. Vorzugsweise müssen alle Kolonnenfahrtkriterien erfüllt sein, damit die ID des Vorderfahrzeugs beziehungsweise des weiteren Vorderfahrzeugs in den Vorderfahrzeug-Historienspeicher eingetragen wird. Das bedeutet insbesondere, dass die Straßenkategorie die Autobahn, die Geschwindigkeit kleiner als 60 km/h, die Relativgeschwindigkeit kleiner als 2 km/h und der Abstand zum Vordermann kleiner als 60 Meter ist.

Durch dieses Ausführungsbeispiel wird die Wahrscheinlichkeit der Kolonnenfahrt verbessert bestimmt, insbesondere mit einer geringeren Falsch-Positiv-Rate.

In einem Ausführungsbeispiel weist der Vorderfahrzeug-Historienspeicher eine vorgegebene Anzahl an Speicherplätzen auf. Die Wahrscheinlichkeit der Kolonnenfahrt wird abhängig von einer relativen Häufigkeit der eingetragenen Identifikationsnummern bestimmt. Die Wahrscheinlichkeit der Kolonnenfahrt wird also abhängig von einem prozentualen Anteil der gleichen Identifikationsnummern von allen eingetragenen Identifikationsnummern bestimmt. Die Anzahl aller Identifikationsnummern entspricht beispielsweise der vorgegebenen Anzahl an Speicherplätzen. Beispielsweise beträgt die vorgegebene Anzahl an Speicherplätzen des Vorderfahrzeug-Historienspeichers zwischen 10 Speicherplätzen und 60 Speicherplätzen, insbesondere zwischen 15 Speicherplätzen und 30 Speicherplätzen, insbesondere 20 Speicherplätze. Liegt ein relativer Anteil einer der Identifikationsnummern beispielsweise über einem vorgegebenen Schwellwert, dann liegt wahrscheinlich eine Kolonnenfahrt vor. Auf dieser Basis kann die Wahrscheinlichkeit einfach und schnell bestimmt werden. Je mehr Speicherplätze der Vorderfahrzeug-Historienspeicher aufweist und je mehr Einträge in den Speicherplätzen zur Bestimmung der relativen Häufigkeit und insbesondere der Wahrscheinlichkeit berücksichtigt werden, umso geringer ist gegebenenfalls die Falsch-Positiv-Rate. Jedoch ist es möglich, dass eine Falsch-Negativ-Rate ansteigt und eine vorliegende Kolonnenfahrt gegebenenfalls nicht als solche beurteilt wird.

Zum Beispiel ist der letzte Eintrag des Vorderfahrzeug-Historienspeichers der zuletzt eingetragene aktuelle Eintrag. Beispielsweise wird der älteste Eintrag des Fahrzeug-Historienspeichers aus dem Vorderfahrzeug-Historienspeicher hinausgeschoben, wenn ein neuer Eintrag in den Vorderfahrzeug-Historienspeicher eingetragen wird. Zum Beispiel wird die Kolonnenfahrt als vorliegend bestimmt, falls der relative Anteil einer der eingetragenen Identifikationsnummern größer als 60 Prozent, insbesondere größer als 80, insbesondere größer als 90 Prozent ist. Auch durch dieses Ausführungsbeispiel kann die Kolonnenfahrtwahrscheinlichkeit verbessert bestimmt werden.

In einem Ausführungsbeispiel wird die Wahrscheinlichkeit der Kolonnenfahrt abhängig von einer Funktion, welche der relativen Häufigkeiten der Identifikationsnummern eine Wahrscheinlichkeit der Kolonnenfahrt zuordnet, bestimmt. Die Wahrscheinlichkeit der Kolonnenfahrt wird also nicht nur als vorliegend oder nicht vorliegend beziehungsweise 0 Prozent oder 100 Prozent bestimmt, sondern insbesondere mit einer prozentualen Angabe zwischen 0 Prozent und 100 Prozent. Dadurch kann beispielsweise in nicht eindeutigen Situationen dennoch die Wahrscheinlichkeit der Kolonnenfahrt aussagekräftig bestimmt werden.

Zum Beispiel ist die Funktion stückweise linear. Zum Beispiel weist die Funktion drei Abschnitte auf. Beispielsweise ist einem ersten Abschnitt der Funktion eine Wahrscheinlichkeit von 0 Prozent zugeordnet. Insbesondere ist einem dritten Abschnitt eine Wahrscheinlichkeit von 100 Prozent zugeordnet. Gegebenenfalls ist einem zweiten Abschnitt eine linear ansteigende Wahrscheinlichkeit zwischen 0 bis 100 Prozent zugeordnet. Vorzugsweise betrifft der lineare Abschnitt einem Bereich der relativen Häufigkeit der Identifikationsnummern zwischen 50 Prozent und 95 Prozent, insbesondere zwischen 65 Prozent und 90 Prozent.

In einem Ausführungsbeispiel wird abhängig von der Wahrscheinlichkeit der Kolonnenfahrt eine Anzahl der zuletzt hinzugefügten Einträge in den Fahrspur-Historienspeicher bestimmt. Abhängig von den zuletzt hinzugefügten Einträgen dieser Anzahl wird der dritte Sollabstand bestimmt.

Zum Beispiel weist der Fahrspur-Historienspeicher 20 Einträge auf. Gegebenenfalls wird in diesem Beispiel abhängig von der Wahrscheinlichkeit der Kolonnenfahrt die Anzahl der zuletzt hinzugefügten Einträge als 10 bestimmt.

Dann werden in diesem Beispiel lediglich die letzten 10 zuletzt hinzugefügten Einträge des Fahrspur-Historienspeichers verwendet, um den dritten Sollabstand zu bestimmen.

Liegt beispielsweise die Wahrscheinlichkeit der Kolonnenfahrt bei 100 Prozent, wird in einem Ausführungsbeispiel der gesamte Bereich also alle Einträge des Fahrspur-Historienspeichers für die Bestimmung des dritten Sollabstands beachtet. Liegt in einem Ausführungsbeispiel die Wahrscheinlichkeit der Kolonnenfahrt bei beispielsweise 0 Prozent, würde in diesem Ausführungsbeispiel nur der letzte Eintrag des Fahrspur-Historienspeichers zur Bestimmung des dritten Sollabstands verwendet werden. In diesem Beispiel entspricht gegebenenfalls der dritte Sollabstand dem zweiten Sollabstand. Zum Beispiel wird bei einer Wahrscheinlichkeit der Kolonnenfahrt, welche zwischen 0 Prozent und 100 Prozent beträgt, ein gleicher Anteil der zuletzt hinzugefügten Einträge des Fahrspur-Historienspeichers zur Bestimmung des dritten Sollabstands verwendet.

In einem Ausbildungsbeispiel wird der dritte Sollabstand (d3) abhängig von dem ersten Sollabstand (d1) und dem zweiten Sollabstand (d2) beispielsweise nach folgender Formel berechnet:

$$d3 = Anteil\ erste\ Fahrspur \cdot d1 + Anteil\ zweite\ Fahrspur \cdot d2$$

Je länger das Fahrzeug also auf der zweiten Fahrspur fährt desto mehr nähern sich die jeweils bestimmten dritten Sollabstände dem zweiten Sollabstand an, insbesondere bis der letzte dritte Sollabstand dem zweiten Sollabstand entspricht. Liegt hingegen zum Beispiel der Anteil der ersten Fahrspur bei 100 %, da das Fahrzeug für die vorgegebene Anzahl an zuletzt hinzugefügten Einträgen in dem Fahrspur-Historienspeicher nur auf der ersten Fahrspur gefahren ist, dann entspricht der dritte Sollabstand dem ersten Sollabstand. Dieses Verhalten wird insbesondere durch dieses Ausbildungsbeispiel erreicht.

In einem Ausführungsbeispiel ist der dritte berechnete Sollabstand stets der einzustellende Sollabstand. Vor dem Spurwechsel ergibt sich aus obiger Formel beispielsweise der erste Sollabstand als der einzustellende Sollabstand für die Längsführung des Fahrzeugs. Nach längerer Fahrt auf der zweiten Fahrspur ergibt aus obiger Formel beispielsweise der zweite Sollabstand als der einzustellende Sollabstand.

In einem Ausführungsbeispiel werden mehrere dritte Sollabstände bestimmt, welche wertmäßig zwischen dem ersten Sollabstand und dem zweiten Sollabstand liegen. Insbesondere werden zwischen einem und 20 dritte Sollabstände bestimmt, insbesondere zwischen zwei und zehn dritten Sollabständen, insbesondere werden drei dritte Sollabstände bestimmt.

Ein weiterer Aspekt der Erfindung betrifft ein elektronisches Assistenzsystem zum Führen eines Fahrzeugs. Insbesondere ist das Assistenzsystem ein Abstandshaltesystem oder weist ein derartiges, zusätzlich zu anderen Systemen, auf. Des Abstandshaltesystem weist insbesondere eine Recheneinheit und eine Speichereinheit auf. Das elektronische Abstandshaltesystem ist dazu eingerichtet, ein Verfahren zur Längsführung eines Fahrzeugs in Bezug zu einem vorausfahrenden Vorderfahrzeug gemäß dem oben genannten Aspekt der Erfindung oder einem Ausführungsbeispiel davon auszuführen. Insbesondere führt das elektronische Abstandshaltesystem das Verfahren aus. Insbesondere weist die Speichereinheit den Fahrspur-Historienspeicher und/oder den Vorderfahrzeug-Historienspeicher auf. Vorteile und Ausführungsbeispiele des Verfahrens gemäß dem oben genannten Aspekts der Erfindung sind auf das elektronische Abstandshaltesystem übertragbar und umgekehrt.

Die Erfindung umfasst auch die Kombinationen der Merkmale der beschriebenen Ausführungsformen.

Im Folgenden werden Ausführungsbeispiele der Erfindung beschrieben. Hierzu zeigt:

Fig. 1 eine beispielhafte Situation, in welcher ein Ausführungsbeispiel eines erfindungsgemäßen Verfahrens zur Längsführung eines Fahrzeugs in Bezug zu einem vorausfahrenden Vorderfahrzeug mittels eines Ausführungsbeispiels eines erfindungsgemäßen elektronischen Abstandshaltesystems durchgeführt wird;

Fig. 2 eine weitere beispielhafte Situation, in welcher ein Ausführungsbeispiel eines erfindungsgemäßen Verfahrens zur Längsführung eines Fahrzeugs in Bezug zu einem vorausfahrenden Vorderfahrzeug mittels eines Ausführungsbeispiels eines erfindungsgemäßen elektronischen Abstandshaltesystems durchgeführt wird;

Fig. 3 eine schematische Darstellung eines Vorderfahrzeug-Historienspeichers eines weiteren Ausführungsbeispiels des erfindungsgemäßen elektronischen Abstandshaltesystems; und

Fig. 4 eine schematische Darstellung eines Fahrspur-Historienspeichers eines weiteren Ausführungsbeispiels des erfindungsgemäßen elektronischen Abstandshaltesystems und eine Funktion zur Zuordnung einer relativen Häufigkeit von Identifikationsnummern zu einer Wahrscheinlichkeit einer Kolonnenfahrt eines weiteren Ausführungsbeispiels des erfindungsgemäßen Verfahrens.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

Fig. 1 zeigt eine beispielhafte Situation, in welcher ein Verfahren zur Längsführung eines Fahrzeugs 1 in Bezug zu einem vorausfahrenden Vorderfahrzeug 2 mittels eines elektronischen Abstandshaltesystems 3 durchgeführt wird. Beispielsweise weist das elektronische Abstandshaltesystem 3 eine Speichereinheit 4 und eine Auswerteeinheit 5 auf.

Insbesondere weist das Verfahren folgende Schritte auf. Beispielsweise wird ein erster Sollabstand 6 bereitgestellt. Insbesondere wird das Fahrzeug 1 hinter dem direkt vor dem Fahrzeug 1 fahrenden Vorderfahrzeug 2 abhängig von dem bereitgestellten ersten Sollabstand 6 auf einer ersten Fahrspur 7 einer Fahrbahn 8 mit zumindest zwei benachbarten Fahrspuren 7, 9 zum Befahren in eine Fahrtrichtung längsgeführt. Insbesondere wird ein Spurwechsel des Fahrzeugs 1 von der ersten Fahrspur 7 zu einer dazu unterschiedlichen zweiten Fahrspur 9 der Fahrbahn 8 durchgeführt. Insbesondere wird ein zweiter Sollabstands 10 nach dem durchgeführten Spurwechsel abhängig von einer lateralen Position der zweiten Fahrspur 9 relativ zur ersten Fahrspur 7 bestimmt. Insbesondere wird das Fahrzeug 1 zu dem die Fahrspur ebenfalls wechselnden Vorderfahrzeug 2 oder zu einem auf der zweiten Fahrspur 9 direkt vor dem Fahrzeug 1 fahrenden weiteren Vorderfahrzeug 11 auf der zweiten Fahrspur 9 mit dem Abstandshaltesystem 3 abhängig von dem bestimmten zweiten Sollabstand 10 längsgeführt.

In der in Fig. 1 dargestellten Situation wechselt das Vorderfahrzeug 2 die Fahrspur gegebenenfalls nicht. Gegebenenfalls verlässt das Fahrzeug 1 durch den Spurwechsel eine Kolonnenfahrt mit dem Vorderfahrzeug 2. Zum Beispiel ist die zweite Fahrspur 9 eine Überholspur. In diesem Fall ist der zweite Sollabstand 10 beispielsweise kleiner als der erste Sollabstand 6. Insbesondere schließt das Fahrzeug 1 in der in Fig. 1 dargestellten Situation zügig zu dem weiteren Vorderfahrzeug 11 auf, insbesondere um das Vorderfahrzeug 2 zu überholen. Eine Gegenfahrbahn ist insbesondere in Fig. 1 nicht dargestellt.

In Fig. 2 ist eine weitere beispielhafte Situation, in welcher das Verfahren zur Längsführung des Fahrzeugs 1 in Bezug zum vorausfahrenden Vorderfahrzeug 2 mittels des elektronischen Abstandshaltesystems 3 durchgeführt wird, gezeigt. Zum Beispiel wechselt in dieser in Fig. 2 gezeigten Situation das Vorderfahrzeug 2 ebenfalls die Fahrspur. Gegebenenfalls bleiben das Vorderfahrzeug 2 und das Fahrzeug 1 in einer Kolonnenfahrt.

Gegebenenfalls wird in der in Fig. 2 dargestellten Situation ein dritter Sollabstand bestimmt. Zum Beispiel folgt das Fahrzeug 1 dem Vorderfahrzeug 2 zunächst auf der ersten Fahrspur 7 mit dem ersten Sollabstand 6. Beispielsweise wechseln anschließend sowohl das Vorderfahrzeug 2 als auch das Fahrzeug 1 von der ersten Fahrspur 7 auf die zweite Fahrspur 9. Gegebenenfalls bestimmt beispielsweise die Auswerteeinheit 5 des Abstandshaltesystems 3 den dritten Sollabstand. Beispielsweise schließt das Fahrzeug 1 bis auf den dritten bestimmten Sollabstand zu dem Vorderfahrzeug 2 auf. Anschließend schließt das Fahrzeug 1 gegebenenfalls bis auf den zweiten bestimmten Sollabstand 10 zu dem Vorderfahrzeug 2 auf. Zum Beispiel ist in der Fig. 2 dargestellten Situation der dritte Sollabstand kleiner als der erste Sollabstand 6 und größer als der zweite Sollabstand 10.

In einem Ausführungsbeispiel weist die Speichereinheit 4 des Abstandshaltesystems 3 einen Vorderfahrzeug-Historienspeicher 12 auf. Der Vorderfahrzeug-Historienspeicher 12 ist beispielhaft in Fig. 3 dargestellt. Der Vorderfahrzeug-Historienspeicher 12 weist beispielsweise eine Zeitspalte 13 und eine entsprechende Identifikationsnummernspalte 14 auf. Zum Beispiel erfasst das Fahrzeug 1 das Vorderfahrzeug 2 und weist diesem eine Identifikationsnummer zu. Beispielsweise wird die zugewiesene Identifikationsnummer als Eintrag 16 mit dem zugehörigen Erfassungszeitpunkt 15 in den Vorderfahrzeug-Historienspeicher 12 eingetragen. Gegebenenfalls erfasst das Fahrzeug 1 das Vorderfahrzeug 2 jede Sekunde. Ist das Vorderfahrzeug 2 gegebenenfalls nicht erfassbar, da es beispielsweise kein Vorderfahrzeug 2 gibt, wird zu dem entsprechenden Zeitpunkt 15a kein Zeichen 16a in die Identifikationsnummernspalte 14 eingetragen. Zum Beispiel ist der Zeitpunkt T1 in den Figuren nicht dargestellt. Beispielsweise sind die Zeitpunkte T2, T3 und T4 in Fig. 2 dargestellt. Zum Beispiel ändert sich zum Zeitpunkt TN die Identifikationsnummer des Vorderfahrzeugs 2, insbesondere da statt dem Vorderfahrzeug 2 nun wie beispielsweise in Fig. 1 dargestellt auf der zweiten Fahrspur 9 das weitere Vorderfahrzeug 11 vor dem Fahrzeug 1 fährt, insbesondere nach dem Spurwechsel.

In einem Ausführungsbeispiel werden die jeweiligen prozentualen Anteile der eingetragenen Identifikationsnummern von einer Gesamtanzahl an Einträgen in dem Fahrspur-Historienspeicher 17 bestimmt. In dem in Fig. 3 gezeigten Beispiel beträgt der prozentuale Anteil einer ersten erfassten Fahrzeugidentifikationsnummer ID1 beispielsweise 60 Prozent und einer zweiten erfassten Fahrzeugidentifikationsnummer ID2 20 Prozent. Gegebenenfalls beträgt in diesem Beispiel die relative Häufigkeit, dass kein Fahrzeug erkannt wurde, 20 Prozent. Insbesondere wird auch der prozentuale Anteil der Einträge 16a ohne Fahrzeugidentifikationsnummer bestimmt.

In Fig. 4 ist ein Fahrspur-Historienspeicher 17 der Speichereinheit 4 des Abstandshaltesystems 3 schematisch dargestellt. Zusätzlich ist in Fig. 4 eine Funktion 18 zur Zuordnung einer relativen Häufigkeit 19 von Identifikationsnummern 16 zu einer Wahrscheinlichkeit 20 einer Kolonnenfahrt dargestellt. Die Funktion 18 weist beispielsweise drei Teilabschnitte 21, 22, 23 auf. Zum Beispiel weist der erste Teilabschnitt einer relativen Häufigkeit 19, welche geringer als ein erster Schwellwert 24 ist eine Wahrscheinlichkeit 20 der Kolonnenfahrt von 0 Prozent zu. Ein dritter Teilabschnitt der Funktion 18 weist eine relativen Häufigkeit 19, welche größer als ein zweiter Schwellwert 25 eine Wahrscheinlichkeit 20 der Kolonnenfahrt von 100 Prozent zu. Beispielsweise weist ein zweiter Teilabschnitt 23 der Funktion 18 linear ansteigend den relativen Häufigkeiten 19, welche zwischen dem ersten Schwellwert 24 und dem zweiten Schwellwert 25 liegen eine Wahrscheinlichkeit 20 der Kolonnenfahrt zwischen 0 Prozent und 100 Prozent zu. Beispielsweise liegt der erste Schwellwert 24 zwischen 50 Prozent und 80 Prozent, insbesondere bei 65 Prozent. Gegebenenfalls liegt der zweite Schwellwert zwischen 80 Prozent und 98 Prozent, insbesondere bei 90 Prozent.

Zum Beispiel weist der Fahrspur-Historienspeicher 17 eine weitere Zeitspalte 26 und eine Spurspalte 27 auf.

Zum Beispiel erfasst das Fahrzeug 1, auf welcher Fahrspur 7, 9 der Fahrbahn 8 es sich aktuell befindet. Die jeweilige erfasste Fahrspur wird beispielsweise in den Fahrspur-Historienspeicher 17 mit dem jeweiligen aktuellen Zeitpunkt eingetragen. Zum Beispiel wird die erste Fahrspur 7 als I1 bezeichnet und die zweite Fahrspur als I2. Es ist auch möglich, dass die Fahrspuren als links oder rechts oder gegebenenfalls bei drei Fahrspuren in einer Richtung als Mitte bezeichnet und in den Fahrspur-Historienspeicher 17 eingetragen werden. Vorzugsweise erfolgt das Erfassen der Fahrspur jede Sekunde.

Zum Beispiel wird eine weitere relative Häufigkeit der eingetragenen Fahrspuren von einer Gesamtanzahl an eingetragenen Fahrspuren bestimmt. Zum Beispiel beträgt die in dem in Fig. 4 dargestellten Beispiel die weitere relative Häufigkeit der Fahrspur I1, welche beispielsweise der ersten Fahrspur 7 entspricht, 62 Prozent. Und die weitere relative Häufigkeit der Fahrspur I2, welche beispielsweise der zweiten Fahrspur 9 entspricht, 38 Prozent.

In einem Ausführungsbeispiel werden zur Bestimmung der weiteren relativen Häufigkeiten der Fahrspuren nur eine Anzahl an Einträgen des Fahrspur-Historienspeicher 17 verwendet, welche abhängig von der Wahrscheinlichkeit 20 der Kolonnenfahrt ist. Wenn die Wahrscheinlichkeit 20 beispielsweise 0 Prozent beträgt, wird lediglich der letzte Eintrag 28 verwendet. Beispielsweise ergibt sich dann eine relative Häufigkeit für die Fahrspur I2 von 100 Prozent und die Fahrspur I1 von 0 Prozent. Beträgt die Wahrscheinlichkeit 20 beispielsweise 100 Prozent werden die weiteren relativen Häufigkeiten abhängig von allen Einträgen des Fahrspur-Historienspeichers 17 verwendet. Beträgt die Wahrscheinlichkeit 20 zwischen 0 Prozent und 100 Prozent, dann wird beispielsweise der entsprechende prozentuale Anteil der Einträge des Fahrspur-Historienspeichers 17 verwendet beginnend mit den zuletzt hinzugefügten Einträgen 28.

In einem Ausbildungsbeispiel wird der dritte Sollabstand nach folgender Formel bestimmt: Dritter Sollabstand = weitere relative Häufigkeit der ersten Fahrspur 7 x dem ersten Sollabstand + weitere relative Häufigkeit der zweiten Fahrspur 9 x dem zweiten Sollabstand 10. Der erste Sollabstand und der zweite Sollabstand dieser Formel können gegebenenfalls vorgegebene Parameter sein.

In einem Ausführungsbeispiel wird das Verfahren folgendermaßen durchgeführt: Zum Beispiel wird zuerst in einem Fahrzeug 1 anhand von Sensordaten des Fahrzeugs 1 die Wahrscheinlichkeit 20 für eine Kolonnenfahrt bestimmt. Anschließend wird gegebenenfalls abhängig von der bestimmten Wahrscheinlichkeit 20 zumindest ein dritter Sollabstand bestimmt, welcher bei dem Spurwechsel beziehungsweise kurz danach eingestellt wird.

Zum Beispiel wird als Basis für die Berechnung der Wahrscheinlichkeit 20 eine Sensorik des Fahrzeugs 1 verwendet, die Informationen über das Fahrzeug 1 umgebende Fahrzeuge in einem Umfeldmodell bereitstellt. Die Sensorik kann zum Beispiel ein nach vorne gerichteter Radarsensor sein, der jedem erkannten Objekt eine eindeutige ID zuordnet. In dem Vorderfahrzeug-Historienspeicher 12 applizierbarer Länge wird sukzessive die ID des vorausfahrenden Vorderfahrzeugs 2 gespeichert. Die Länge des Vorderfahrzeug-Historienspeichers 12 richtet sich beispielsweise danach, ab welcher Zeitdauer eine Kolonnenfahrt als solche erkannt werden soll, beispielsweise zwischen 20 Sekunden und 60 Sekunden. Je größer der Speicher, desto größer ist insbesondere auch die Dauer, bis die Kolonnenfahrt als solche erkannt wird. Die ID wird zum Beispiel nur dann in den Vorderfahrzeug-Historienspeicher 12 aufgenommen werden, wenn Kolonnenfahrtkriterien erfüllt sind. Der in Fig. 3 gezeigte exemplarischen Auszug des Vorderfahrzeug-Historienspeichers 12 zeigt zum Beispiel zum ersten Zeitstempel 15a keine ID, da beispielsweise kein vorausfahrendes Objekt, insbesondere Vorderfahrzeug 2 erkannt wurde und/oder die Kolonnenfahrtkriterien nicht erfüllt waren. Anschließend wird gemäß dem exemplarischen Auszug zunächst ein Objekt beziehungsweise ein Vorderfahrzeug 2 mit der ID 1 erkannt, anschließend ein neues vorausfahrendes Objekt beziehungsweise weiteres Vorderfahrzeug 11 mit der ID 2. Zum Beispiel werden für alle erkannten Objekte beziehungsweise Vorderfahrzeuge 2, 11 während eines Zeitraums, der der Länge des Vorderfahrzeug-Historienspeichers 12 entspricht, eine prozentuale Verteilung berechnet. Mittels des prozentualen Anteils des Objekts beziehungsweise des Vorderfahrzeugs 2, 11 mit dem größten Anteil wird anschließend anhand der Funktion 18 die Wahrscheinlichkeit 20 für die Kolonnenfahrt bestimmt. Fig. 4 zeigt exemplarisch die Funktion 18. Je nach gewünschtem Systemverhalten kann diese Funktion 18 angepasst werden. Unterhalb des erstem Schwellwertes 24 von beispielsweise 65% wird davon ausgegangen, dass gegebenenfalls keine Kolonnenfahrt vorliegt (p=0). Bei Überschreiten des ersten Schwellwertes 24 steigt zum Beispiel die Wahrscheinlichkeit sukzessive an. Oberhalb des zweiten Schwellwertes 25, der zum Beispiel bei 90% liegt, wird insbesondere angenommen, dass eine Kolonnenfahrt vorliegt (Wahrscheinlichkeit p=1). Mittels Anwendung einer Hysterese zwischen 90% und 100% wird insbesondere vermieden, dass bei sehr kurzen Wechseln der ID des vorausfahrenden Vorderfahrzeugs 2, 11 zum Beispiel während des Spurwechsels oder bei Sensorfehlern ein Abbruch der Kolonnenfahrt erkannt wird.

Mittels der so bestimmten Wahrscheinlichkeit 20 der Kolonnenfahrt kann zum Beispiel eine Strategie zur Durchführung des Spurwechsels hergeleitet werden. In dem Fahrspur-Historienspeicher 17 applizierbarer Länge wird die vom Fahrzeug 1 befahrene Fahrspur l1, l2 sukzessive erfasst. Anhand der Prozentwerte der befahrenen Fahrspur und der bereitgestellten Sollabstände pro Fahrspur kann zumindest ein gewichteter dritter Sollabstand anhand des Fahrspur-Historienspeichers 17 bestimmt werden. In einem nicht dargestellten Beispiel werden die dritten Sollabstände insbesondere folgendermaßen berechnet:

1. Vor dem Spurwechsel: Anteil Mitte 100%; Anteil Links 0%:

$$\text{dritter Sollabstand} = 1*\text{erster Sollabstand} + 0*\text{zweiter Sollabstand} = \text{erster Sollabstand}$$

2. Während dem Spurwechsel: z.B. Anteil Mitte 38%; Anteil Links 62%:

$$\text{dritter Sollabstand} = 0{,}38*\text{erster Sollabstand} + 0{,}62*\text{zweiter Sollabstand}$$

3. Nach dem Spurwechsel: Anteil Mitte 0%; Anteil Links 100%:

$$\text{dritter Sollabstand} = 0*\text{erster Sollabstand} + 1*\text{zweiter Sollabstand} = \text{zweiter Sollabstand}$$

Auf diese Weise wird ein kontinuierlicher Abstandsverlauf während des Spurwechsels realisiert. Um dabei gegebenenfalls die Wahrscheinlichkeit 20 der Kolonnenfahrt zu berücksichtigen, wird zum Beispiel nur ein von der Wahrscheinlichkeit 20 abhängiger Bereich des Fahrspur-Historienspeichers 17 genutzt. Beträgt die Wahrscheinlichkeit 100%, wird gegebenenfalls der gesamte Bereich des Fahrspur-Historienspeichers 17 für die Bestimmung des dritten Sollabstands genutzt. Dadurch wird der dritte Sollabstand nach dem Spurwechsel nicht sprunghaft auf den zweiten Sollabstand 10 der zweiten Fahrspur 9 geregelt, sondern sukzessive angepasst. Bei einer Wahrscheinlichkeit 20 von 0% wird zum Beispiel der Bereich auf nur den neuesten, letzten, aktuellen Eintrag 28 reduziert. Nach dem Spurwechsel wird der dritte Sollabstand in diesem Fall beispielsweise nicht bestimmt oder so bestimmt, dass er dem zweiten Sollabstand 10 entspricht und dadurch sprunghaft von dem ersten Sollabstand 6 auf den zweiten Sollabstand 10 geregelt wird.

In einem weiteren Ausführungsbeispiel werden Parameter des Abstandhaltesystems hinsichtlich der Dynamik eines Regelvorgangs bei erkannter Kolonnenfahrt angepasst. Beispielsweise wird ein Regler des Abstandshaltesystems situativ "sportlicher" abgestimmt, sodass der jeweilige Sollabstand schneller eingeregelt und besser gehalten wird. Dies kann zum Beispiel bei dem Spurwechsel während der Kolonnenfahrt von Vorteil sein, wenn das vorausfahrende Vorderfahrzeug 2 beschleunigt und beispielsweise auf die linke Spur wechselt. Alternativ ist der Regler bei erkannter Kolonnenfahrt dauerhaft sportlicher abgestimmt, um eine am Vorderfahrzeug 2 orientierte bessere Systemdynamik zu realisieren. So kann verhindert werden, dass das Fahrzeug 1 zum Beispiel beim Spurwechsel zu weit zurückfällt oder zu dicht aufschließt.

Bezugszeichenliste

| | |
|---|---|
| 1 | Fahrzeug |
| 2 | Vorderfahrzeug |
| 3 | Abstandshaltesystem |
| 4 | Speichereinheit |
| 5 | Auswerteeinheit |
| 6 | Sollabstand |
| 7 | erste Fahrspur |
| 8 | Fahrbahn |
| 9 | zweite Fahrspur |
| 10 | zweiter Sollabstand |
| 11 | Vorderfahrzeug |
| 12 | Vorderfahrzeug-Historienspeicher |

13 Zeitspalte
14 Identifikationsnummernspalte
15 Erfassungszeitpunkt
15a Zeitpunkt
16 Eintrag
16a Zeichen
17 Fahrspur-Historienspeicher
18 Funktion
19 Häufigkeit
20 Wahrscheinlichkeit
21 erster Teilabschnitt
22 dritter Teilabschnitt
23 zweiter Teilabschnitt
24 erster Schwellwert
25 zweiter Schwellwert
26 Zeitspalte
27 Spurspalte
28 Eintrag

## Patentansprüche

**1.** Verfahren zur Längsführung eines Fahrzeugs (1) in Bezug zu einem vorausfahrenden Vorderfahrzeug (2, 11) mittels eines elektronischen Abstandshaltesystems (3), aufweisend die Schritte:

a) Bereitstellen eines ersten Sollabstands (6);
b) Längsführen des Fahrzeugs (1) hinter dem direkt vor dem Fahrzeug (1) fahrenden Vorderfahrzeug (2) abhängig von dem bereitgestellten ersten Sollabstand (6) auf einer ersten Fahrspur (7) einer Fahrbahn (8) mit zumindest zwei benachbarten Fahrspuren (7, 9) zum Befahren in eine Fahrtrichtung;
c) Durchführen eines Spurwechsels des Fahrzeugs (1) von der ersten Fahrspur (7) zu einer dazu unterschiedlichen zweiten Fahrspur (9) der Fahrbahn (8);
d) Bestimmen eines zweiten Sollabstands (11) nach dem durchgeführten Spurwechsel abhängig von einer lateralen Position der zweiten Fahrspur (9) relativ zur ersten Fahrspur (7); und
e) Längsführen des Fahrzeugs (1) zu dem die Fahrspur ebenfalls wechselnden Vorderfahrzeug (2) oder zu einem auf der zweiten Fahrspur (9) direkt vor dem Fahrzeug (1) fahrenden weiteren Vorderfahrzeug (11) auf der zweiten Fahrspur (9) mit dem Abstandshaltesystem (3) abhängig von dem bestimmten zweiten Sollabstand (10).

**2.** Verfahren nach Anspruch 1, wobei mindestens ein dritter Sollabstand bestimmt wird, wobei das Fahrzeug (1) auf der zweiten Fahrspur (9) zunächst abhängig von dem dritten Sollabstand längsgeführt wird, bevor das Fahrzeug (1) abhängig von dem zweiten Sollabstand (10) längsgeführt wird.

**3.** Verfahren nach Anspruch 2, wobei der dritte Sollabstand abhängig von einem Verhältnis von einem ersten Zeitanteil, während dessen das Fahrzeug (1) die erste Fahrspur (7) befährt, zu einem zweiten Zeitanteil, während dessen das Fahrzeug (1) die zweite Fahrspur (9) befährt, bestimmt wird.

**4.** Verfahren nach einem der Ansprüche 2 oder 3, wobei eine Wahrscheinlichkeit (20) bestimmt wird, ob eine Kolonnenfahrt vorliegt, bei welcher das Fahrzeug (1) dem Vorderfahrzeug (2) auf einer Fahrbahn (8) mit zumindest zwei benachbarten Fahrspuren (7, 9) in eine Fahrtrichtung für eine vorgegebene Mindestzeit folgt, und abhängig von der bestimmten Wahrscheinlichkeit (20) der dritte Sollabstand bestimmt wird.

**5.** Verfahren nach einem der vorhergehenden Ansprüche, wobei mittels einer Recheneinheit des Fahrzeugs (1) ein Vorderfahrzeug-Historienspeicher (12) erzeugt wird, wobei dem Vorderfahrzeug (2, 11) eine Identifikationsnummer zugewiesen wird und die zugewiesene Identifikationsnummer als Eintrag (16) in den Vorderfahrzeug-Historienspeicher (12) eingetragen wird und/oder mittels der Recheneinheit ein Fahrspur-Historienspeicher (17) erzeugt wird, wobei eine aktuell befahrene Fahrspur (7, 9) als Eintrag (28) in den Fahrspur-Historienspeicher (17) eingetragen wird.

**6.** Verfahren nach Anspruch 5, wobei die Identifikationsnummer dann in den Vorderfahrzeug-Historienspeicher (12) eingetragen wird, wenn Kolonnenfahrtkriterien erfüllt sind.

7. Verfahren nach Anspruch 4 und einem der Ansprüche 5 oder 6, wobei der Vorderfahrzeug-Historienspeicher (12) eine vorgegebene Anzahl an Speicherplätzen aufweist und die Wahrscheinlichkeit (20) der Kolonnenfahrt abhängig von einer relativen Häufigkeit (19) der Identifikationsnummern bestimmt wird.

8. Verfahren nach Anspruch 7, wobei die Wahrscheinlichkeit (20) der Kolonnenfahrt abhängig von einer Funktion (18), welche der relativen Häufigkeiten (19) der Identifikationsnummern eine Wahrscheinlichkeit (20) der Kolonnenfahrt zuordnet, bestimmt wird.

9. Verfahren nach Anspruch 4 und einem der Ansprüche 5 bis 8, wobei abhängig von der Wahrscheinlichkeit (20) der Kolonnenfahrt eine Anzahl der zuletzt hinzugefügten Einträge (28) in den Fahrspur-Historienspeicher (17) bestimmt wird, wobei abhängig von den zuletzt hinzugefügten Einträgen (28) dieser Anzahl der dritte Sollabstand bestimmt wird.

10. Elektronisches Abstandshaltesystem (3), aufweisend eine Recheneinheit (5) und eine Speichereinheit (4), wobei das elektronische Abstandshaltesystem (3) dazu eingerichtet ist, ein Verfahren nach einem der vorhergehenden Ansprüche auszuführen.

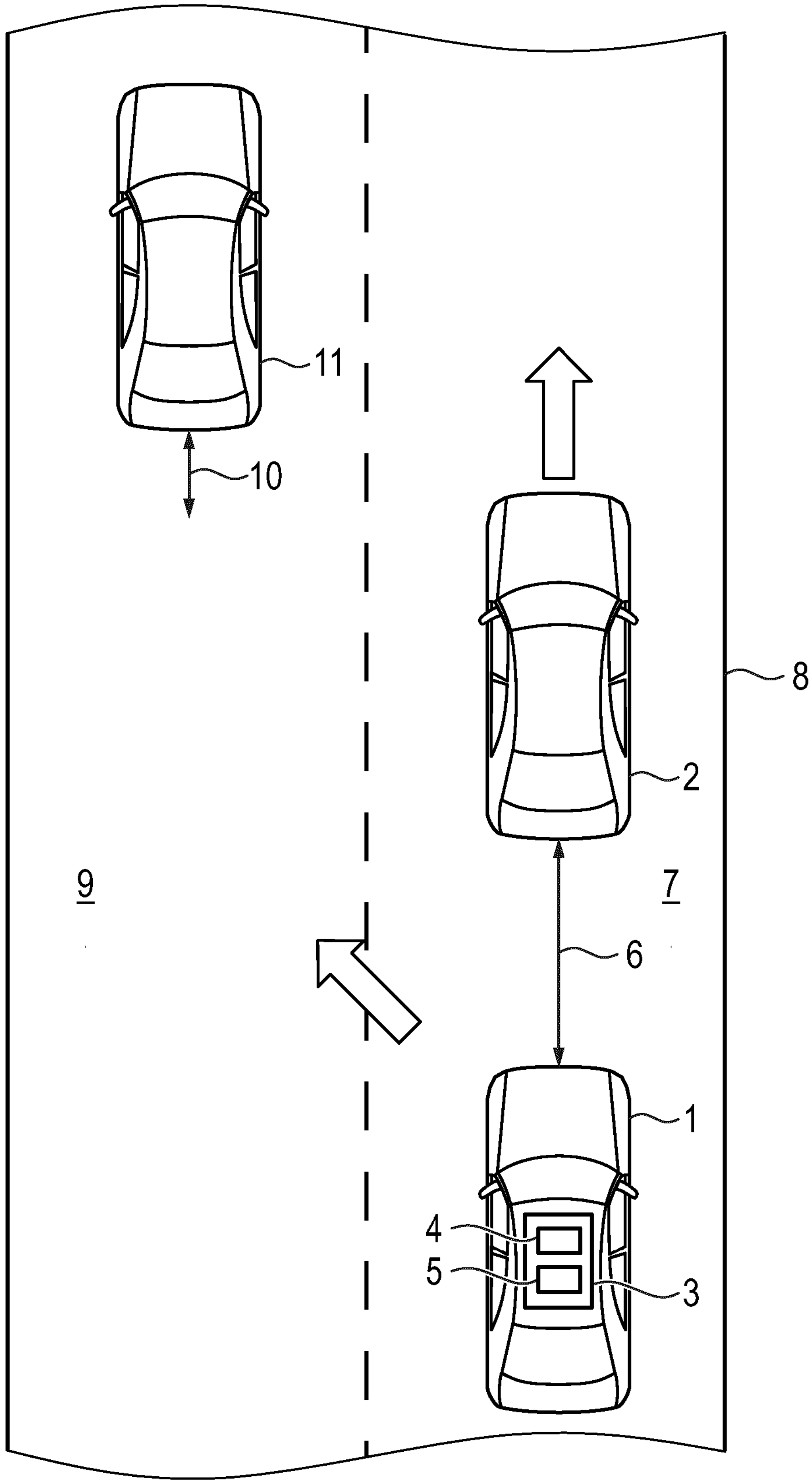


Fig. 1

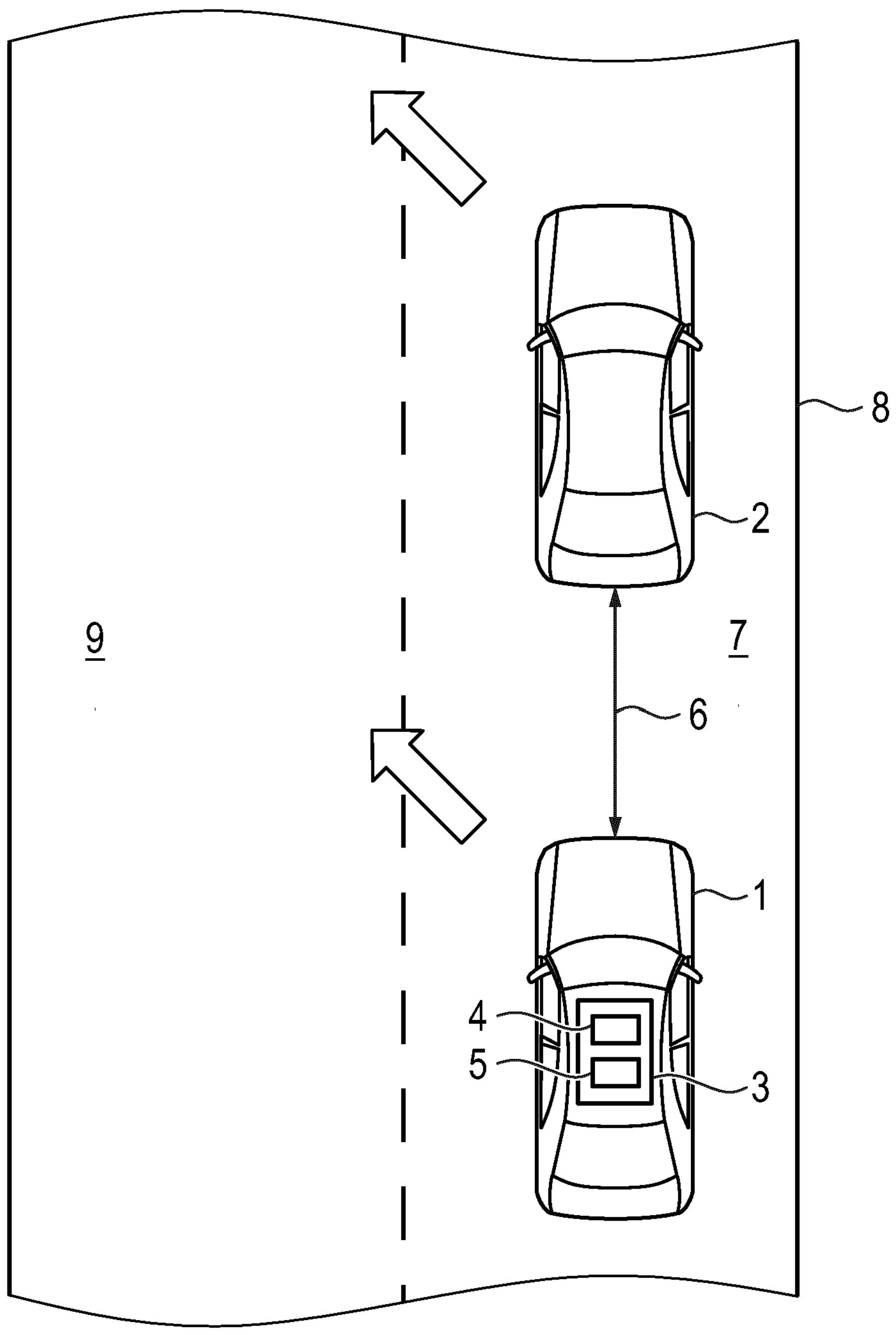


Fig. 2

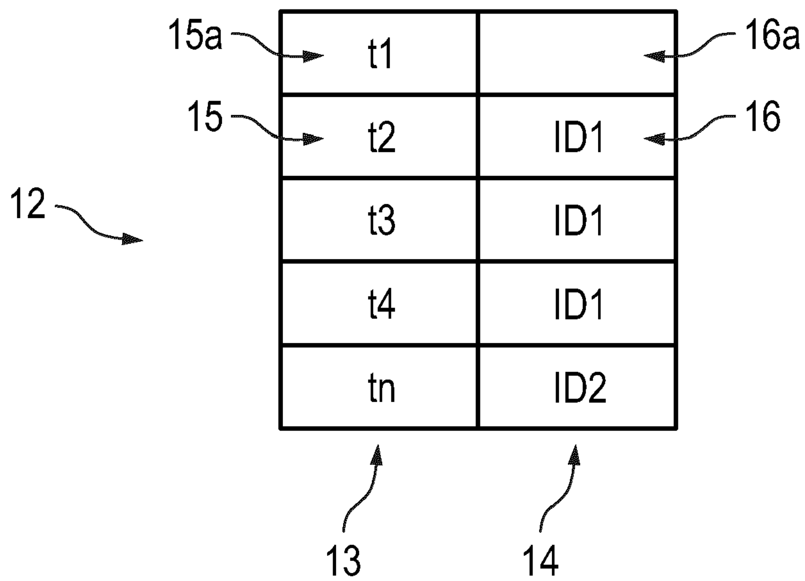


Fig. 3

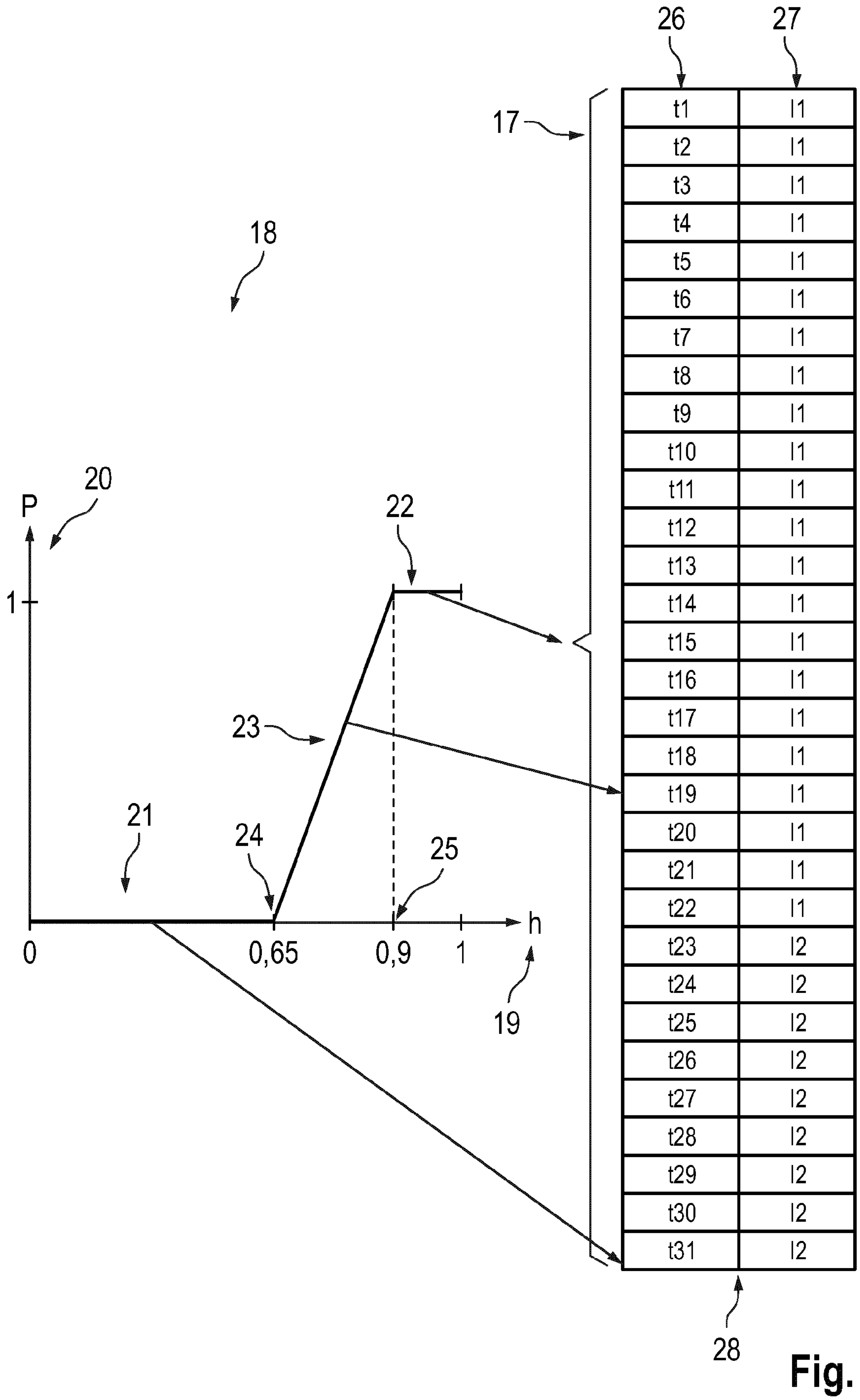
26
27
17
18
20
P
1
22
23
21
24
25
0
0,65
0,9
1
h
19
t1 I1
t2 I1
t3 I1
t4 I1
t5 I1
t6 I1
t7 I1
t8 I1
t9 I1
t10 I1
t11 I1
t12 I1
t13 I1
t14 I1
t15 I1
t16 I1
t17 I1
t18 I1
t19 I1
t20 I1
t21 I1
t22 I1
t23 I2
t24 I2
t25 I2
t26 I2
t27 I2
t28 I2
t29 I2
t30 I2
t31 I2
28

Fig. 4

Europäisches Patentamt
European Patent Office
Office européen des brevets

# EUROPÄISCHER RECHERCHENBERICHT

Nummer der Anmeldung
EP 25 16 2145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2018 221860 A1 (VOLKSWAGEN AG [DE]) 2. Juli 2020 (2020-07-02) * Absätze [0004] - [0013], [0018], [0019]; Abbildungen 1,2 * | 1-10 | INV. B60W30/16 B60W30/18 |
| A | DE 10 2009 033800 A1 (DAIMLER AG [DE]) 25. März 2010 (2010-03-25) * das ganze Dokument * | 1-10 | |
| A | DE 10 2007 031420 A1 (DEUTSCH ZENTR LUFT & RAUMFAHRT [DE]) 8. Januar 2009 (2009-01-08) * das ganze Dokument * | 1-10 | |
| A | US 2018/334167 A1 (DROWN JEFFERY E [US] ET AL) 22. November 2018 (2018-11-22) * das ganze Dokument * | 1-10 | |

RECHERCHIERTE SACHGEBIETE (IPC)

B60W

Der vorliegende Recherchenbericht wurde für alle Patentansprüche erstellt

1

| Recherchenort | Abschlußdatum der Recherche | Prüfer |
|---|---|---|
| München | 31. Juli 2025 | Bak, Maciej |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 16 2145

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2025

| Im Recherchenbericht angeführtes Patentdokument | Datum der Veröffentlichung | Mitglied(er) der Patentfamilie | Datum der Veröffentlichung |
|---|---|---|---|
| DE 102018221860 A1 | 02-07-2020 | CN 111391833 A | 10-07-2020 |
| | | DE 102018221860 A1 | 02-07-2020 |
| | | EP 3670280 A1 | 24-06-2020 |
| | | US 2020189598 A1 | 18-06-2020 |
| DE 102009033800 A1 | 25-03-2010 | KEINE | |
| DE 102007031420 A1 | 08-01-2009 | KEINE | |
| US 2018334167 A1 | 22-11-2018 | KEINE | |

EPO FORM P0461

Für nähere Einzelheiten zu diesem Anhang : siehe Amtsblatt des Europäischen Patentamts, Nr.12/82